# EUROPEAN PATENT SPECIFICATION

(11) **EP 1 899 157 B1**
(45) Date of publication and mention of the grant of the patent: **11.12.2013**
(21) Application number: 06800007.4
(22) Date of filing: 06.07.2006
(51) Int. Cl.: D01D 5/00, D01F 6/96, B01J 13/14

(54) **Method of fabricating nanoscale structures**
Verfahren zur Herstellung von Nanoskalenstrukturen
Procédé de préparation de structures nanometriques

(30) Priority: 07.07.2005 US 176017; 11.10.2005 US 248952
(43) Date of publication of application: 19.03.2008
(73) Proprietor: Specialty Coating Systems, Inc., Indianapolis, Indiana 46278 (US)
(72) Inventor: KUMAR, Rakesh, Carmel, IN 46032 (US); SINGH, Bawa, Voorhees, NJ 08043 (US); LEWIS, Brian, G., Branford, CT 06405 (US); MARCZI, Michael, T., Chester, NJ 07930 (US); HANEFELD, Phillip, D-68159 Mannheim (DE); KRIHA, Olaf, 67063 Ludwigshafen (DE); GREINER, Andreas, D-35287 Amoeneberg (DE)
(74) Representative: Gill, Siân Victoria
(86) International application number: PCT/US2006/026356
(87) International publication number: WO 2007/008607

(56) References cited:
- US-A1- 2003 228 411
- US-B1- 6 194 066
- US-B1- 6 231 744
- H. HAOQING ET AL.: "Poly(p-xylylene) Nanotubes by Coating and Removal of Ultrathin Polymer Template Fibers", MACROMOLECULES, vol. 35, no. 7, 28 February 2002 (2002-02-28), pages 2429-2431, XP002622573, DOI: 10.1021/ma011607i
- LONG J W ET AL: "Three-Dimensional Battery Architectures", CHEMICAL REVIEWS, ACS,WASHINGTON, DC, US, vol. 104, no. 10, 1 January 2004 (2004-01-01), pages 4463-4492, XP002543259, ISSN: 0009-2665, DOI: DOI:10.1021/CR020740L [retrieved on 2004-08-19]
- MARTIN C R: "Membrane-Based Synthesis of Nanomaterials", CHEMISTRY OF MATERIALS, AMERICAN CHEMICAL SOCIETY, WASHINGTON, US, vol. 8, no. 8, 1 January 1996 (1996-01-01) , pages 1739-1746, XP002980411, ISSN: 0897-4756, DOI: DOI:10.1021/CM960166S
- STEINHART M ET AL: "POLYMER NANOTUBES BY WETTING OF ORDERED POROUS TEMPLATES", SCIENCE, AMERICAN ASSOCIATION FOR THE ADVANCEMENT OF SCIENCE, WASHINGTON, DC; US, vol. 296, 14 June 2002 (2002-06-14), page 1997, XP001090914, ISSN: 0036-8075, DOI: DOI:10.1126/SCIENCE.1071210

## Description

### BACKGROUND OF INVENTION

### 1. Field of Invention

This invention relates to nanoscale and mesoscale structures and methods of preparation and use thereof.

### 2. Discussion of Related Art

Goldstein et al., in U.S. Patent No. 4,381,963, disclose a microfabrication molding process.

Olson et al., in U.S. Patent No. 4,508,760, disclose a method and apparatus for microencapsulation.

Versic, in U.S. Patent No. 5,069,973, discloses a moldable microcapsule that contains a high percentage of solid core material, and method of manufacture thereof.

Witzke et al., in U.S. Patent No. 5,094,906, disclose ceramic microtubular materials and methods of making same.

Versic, in U.S. Patent No. 5,288,504, discloses pharmaceuticals microencapsulated by vapor deposited polymers.

Hoffman, in U.S. Patent Nos. 5,298,298, 5,352,512, and 6,194,066, discloses microscopic tube material and method of their manufacture.

Craighead et al., in U.S. Patent No. 6,559,474, disclose a method for topographical patterning of materials.

Feldheim et al., in U.S. Patent No. 6,602,932, disclose nanoparticle composites and nanocapsules for guest encapsulation and method for synthesizing same.

Greiner et al., in U.S. Patent No. 6,667,099, disclose meso- and nanotubes.

Rennebeck, in International Publication No. WO 97/26225 discloses hollow microfibers of ceramic material and a process for its manufacture and its use.

Laurencin, et al., in International Publication No. WO 99/18893, disclose hybrid nanofibril matrices for use as tissue engineering devices.

### SUMMARY OF THE INVENTION

In accordance with one or more embodiments, the invention relates to a method of fabricating nanoscale structures comprising acts of providing a porous substrate having pores of less than about 1 µm, introducing parylene precursor material into the pores, and removing the substrate to produce the nanoscale structures.

### BRIEF DESCRIPTION OF THE DRAWINGS

The accompanying drawings are not intended to be drawn to scale. In the drawings, each identical or nearly identical component that is illustrated in various figures is represented by a like numeral. For purposes of clarity, not every component may be labeled in every drawing.

In the drawings:
FIG. 1 is a chart showing acts directed at preparing nanoscale structures in accordance with one or more embodiments of the invention;
FIG. 2 is a copy of a photomicrograph showing mesoscale structures;
FIGS. 3A and 3B are copies of photomicrographs showing nanoscale structures in accordance with one or more embodiments of the invention;
FIG. 4 is a copy of a photomicrograph showing functionalized structures in accordance with one or more embodiments of the invention;
FIG. 5 is a diagram schematically illustrating steps utilized to prepare nanoscale structures in accordance with one or more embodiments of the invention;
FIGS. 6A and 6B are copies of photomicrographs of nanoscale structures prepared as described in Example 4, where FIG. 6A is a reproduction of a scanning electron micrograph (SEM) image showing parylene nanoscale fibers between layers or films and FIG. 6B is a reproduction of an SEM image showing the parylene nanoscale fibers after separation of the layers in accordance with one or more embodiments of the invention;
FIG. 7 is a diagram schematically illustrating steps utilized to prepare nanoscale structures in accordance with one or more embodiments of the invention;
FIGS. 8A and 8B are copies of scanning electron micrographs of nanoscale structures prepared as described in Example 5 in accordance with one or more embodiments of the invention;
FIG. 9 is a diagram schematically illustrating steps utilized to prepare nanoscale structures in accordance with one or more embodiments of the invention;
FIGS. 10A and 10B are copies of scanning electron images showing parylene nanoscale fibers prepared as described in Example 6 in accordance with one or more embodiments of the invention;
FIGS. 11A is a copy of a scanning electron image showing a porous silica template utilized to prepare hollow nanoscale tubular structures as described in Example 7;
FIGS. 11B is a copy of a scanning electron image showing the porous silica template having parylene deposited in the pores thereof as described in Example 7;
FIG. 11 C is a copy of a scanning electron image showing the deposited parylene structure after removal of the fugitive template substrate as described in Example 7; and
FIGS. 11D and 11E are copies of scanning electron images showing the hollow nanoscale fibers produced as described in Example 7.

### DETAILED DESCRIPTION

As used herein, the term "plurality" refers to two or more items or components. The terms "comprising," "including," "carrying," "having," "containing," and "involving," whether in the written description or the claims and the like, are open-ended terms, i.e., to mean "including but not limited to." Thus, the use of such terms is meant to encompass the items listed thereafter, and equivalents thereof, as well as additional items. Only the transitional phrases "consisting of" and "consisting essentially of' are closed or semi-closed transitional phrases, respectively, with respect to the claims.

This invention is not limited in its application to the details of construction and the arrangement of components set forth in the following description or illustrated in the drawings. The invention is capable of embodiments and of being practiced or of being carried out in various ways beyond those exemplarily presented herein.

The structures or bodies made according to the present invention can have any desired outer dimension in the nanoscale domain. In some cases, the outer dimension can be predetermined and/or dictated by a particular end use or application. For example, where a particular outer dimension of a spherically-shaped body is desired, the systems and techniques of the invention can provide a structure or body having a target outer dimension.

Nanoscale structures are those having a dimension, at least one relevant dimension, of about 0.5 nm to about 50 nm. Mesoscale structures are those having a dimension of about 100 nm to about 100 µm. Indeed, the nanoscale structures of the invention can have an outer dimension of less than about 100 µm. In accordance with one or more particular embodiments of the invention, a shell of the nanoscale structures of the invention can have an outer dimension of less than about 1 µm, and in other cases, less than about 100 nm.

In accordance with one or more particular embodiments, the structure or body made according to the present invention can have an outer dimension of less than about 1 µm. Where appropriate for a particular application, or as desired, the structure can have an outer dimension of less than about 100 nm and, in other cases, the outer dimension is less than about 10 nm. The outer dimension can be an average diameter or an effective diameter pertinent to the end use application or service. For example, the effective diameter can be a hydrodynamic diameter that characterizes the hydrodynamic nature of the nanoscale or mesoscale structure or body in a fluid or medium.

The invention further provides techniques directed at fabricating or producing nanoscale structures.

The structures made according to the present invention can have any desired shape. Typically, the structures made according to the present invention are closed, without an aperture or opening which would provide indiscriminant direct communication between an enclosed, interior volume of the structure and an outside, exterior volume or space. Thus, in accordance with one or more particular embodiments, the invention provides spherically-shaped, closed structures or bodies defined by a shell that can limit physical, chemical, and/or electrochemical, interaction between an interior volume or cavity of the structure and an exterior environment thereof. However, other closed, non openended structures are contemplated by the systems, articles, and/or techniques of the invention. For example, conically- and frustoconically-shaped bodies as well as structures having toroidal and ellipsoidal configurations, and combinations thereof, can be pertinent to certain aspects of the invention. Indeed, in accordance with some aspects, asymmetrical structures are pertinent to one or more embodiments of the invention whereas further aspects of the invention can be directed to structures or bodies having one or more symmetrical attributes. For example, the structures can be symmetrical about a point, providing a substantially spherical shape, or can be symmetrical about a straight or curved line segment, providing a cylindrical shape. In accordance with further embodiments of the invention, two or more structures can form one or more aggregates. The aggregation of the structures can comprise a plurality of such structures, and, in some cases, one or more kinds of structures, sizes, and/or shapes can comprise the aggregation. The structures of the aggregation can be magnetically, chemically, electrochemically, and/or electrically linked. For example, two or more structures of an aggregation can be chemically joined through one or more chemical linkages, such as a polymer chain.

The shell of one or more structures of the invention can have one or a plurality of layers. Layers are typically represented by uniformity in chemical composition, substantially throughout the particular layer. Other aspects pertaining to each layer relates to a lack of an interface defining a change in chemical composition, in crystallinity, and/or in a change in material density but not necessarily a change in thickness. Thus, for example, each layer of the shell can have a varying thickness and be comprised of the same material.

The shell of the structures of the invention can have any desired thickness that provides a desired physical, chemical, and/or biological effect or characteristic. The shell, which can comprise one or more layers, can have an average thickness that provides, depending on other factors, a desired or target transport rate of a species between an interior volume and an exterior environment of the nanoscale or mesoscale structure. For example, the shell can have a thickness, which can be represented as an average thickness or, in some cases as a minimum thickness, of less than about 25 µm.

The shell can be monolithic thereby having no seams or joints that serve as features or provide indicia of discontinuity. In particular, each of the one or more layers can be monolithic. The monolithic nature of the shell or at least one layer thereof, prevents indiscriminant communication between the exterior volume from the interior volume. In accordance with one or more aspects pertaining to one or more embodiments of the invention, each or at least one of the one or more layers comprising the shell can be porous, or at least partially porous, that can selectively permit the transport of one or more species therethrough. In accordance with still further aspects of some embodiments of the invention, the structure can comprise a shell having a first layer that is selectively porous to inhibit transport therethrough of a particular species and at least one layer that inhibit transport therethrough of a second particular species. In accordance with other aspects relevant to one or more alternative embodiments of the invention, the first layer of the shell can selectively permit one or more genus of compounds and can further comprise one or more layers that selectively permit the transport therethrough of a particular species within the genus. The shell comprises parylene in one or more layers. Any one or more suitable grades or variants of parylene compounds can be utilized in the invention. Examples of grades or types of parylene include, but are not limited to, PARYLENE HT™, parylene C, parylene N, and, in some cases, parylene D.

In accordance with one or more embodiments of the invention, the shell can comprise one or more coatings on at least a portion of a surface thereof. In accordance with further embodiments of the invention, the one or more coatings can comprise a plurality of moieties having one or more functional groups. For example, a first coating can comprise a first or first mixture of moieties, in a first region or area of the shell surface, and can further comprise a second coating in a second region, of the shell surface, which can be proximate but not necessarily adjacent to the first region. The one or more coatings can render or provide the shell, at least partially, with a functionality or property that affects the chemical and/or physical behavior of the nanoscaled or mesoscaled structure. Thus, for example, a coating on an external surface of the structure of the invention can comprise a functionality that is hydrophilic, hydrophobic, or lipophilic, thus imparting such character on at least a portion of the shell.

In accordance with one or more particular embodiments of the invention, vapor deposition of precursor components to produce polymeric structures in accordance with some embodiments of the invention can be performed according to the following scheme, at the exemplarily indicated temperatures and pressures.

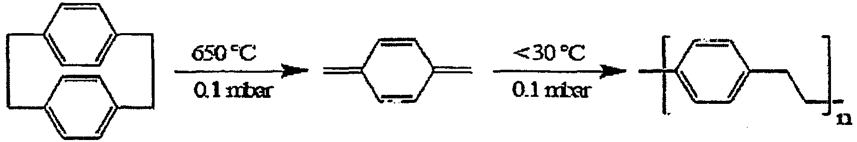

In accordance with some of embodiments of the invention, the structures can comprise a coating, having one or more layers, of a metal or alloys or mixtures thereof. Indeed, the mesoscale or nanoscale structures can be rendered non-porous by depositing one or more layers of a non-porous material. Thus, for example, the mesoscale or nanoscale structures can comprise one or more coatings of precious metals, transition metals, valve metals, and/or platinum group metals or mixtures, oxides, nitrides, and/or carbides thereof. Further or additional functionalities can be disposed on at least a portion of the structures following metal coating operations.

Metal or non-porous material deposition can be performed by any suitable technique. For example, the structures can be exposed, such as by spraying or immersion, to one or more solutions comprising one or more metal salts. The metal salts can further be converted to oxide, carbide, and/or nitride analogues by promoting the corresponding reaction. Other techniques such as vapor deposition, electrolysis, including electroless processes, can also be utilized.

In accordance with further embodiments of the invention, the coating can comprise a functional group that has a paramagnetic and/or conductive, electrically or ionically, nature. Thus, the one or more functional groups can provide or promote selective effects that can modify or promote a particular or desired behavior on the structures of the invention with respect to neighboring structures and/or with respect to its environment. For example, the structures of the invention can be coated with one or more hydrophobic functional groups, such as lipids or hydrocarbons. The functional groups can thus effect or promote the nanoscaled or mesoscaled structures to exhibit a desired or particular behavior. For example, the functionality can have a hydrophobic nature that promotes self-assembly of the nanoscale or mesoscale structures when disposed in an aqueous environment.

In accordance with further aspects of the invention, the coating can render the shell chemically inert, at least partially, with respect to one or more reactive species. For example, at least a portion of the coating can comprise one or more pendant moieties that comprise a functional group selected from the group consisting of a hydroxyl, a carboxyl or carboxylic acid, a sulfonyl, an amide, an amine, and mixtures of combinations thereof. Other aspects of the invention are further directed to one or more coatings that can promote a selective affinity for one or more target species. For example, the one or more coatings can comprise one or more ligands or chelatable functional groups that reversibly, or irreversibly, binds one or more metal, or metal ions, or species. Examples of chelating functionalities include, but are not limited to, those based on imidodiacetate, ethylenediamine, porphyrin such as porphine, ethylenediaminetetraacetic acid, dimercaprol (2,3-dimercapto-1-propanol), and other multi-dentate ligands that can form two or more bonds to precious and/or transition metals, or ionic variants thereof.

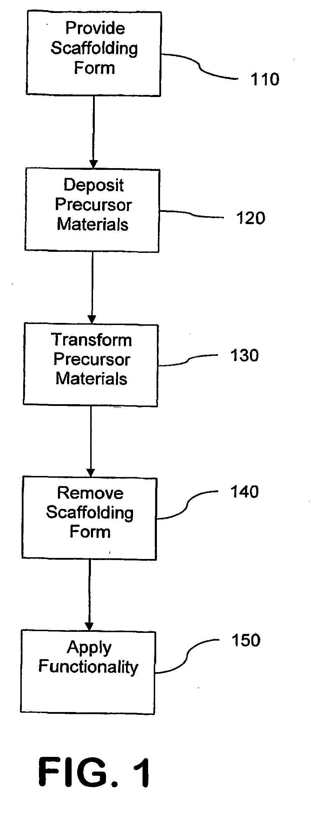

The various structures of the invention are prepared by utilizing the method defined in claim 1. As exemplarily shown in FIG. 1, the structures of the invention are prepared by utilizing, providing 120, a scaffolding material or template substrate, typically a particle or a collection of particles, having a desired shape factor that approximates a desired shape. The scaffolding material typically serves as a mold upon which a material can be deposited. The surface of such scaffolding blocks or substrates can be treated or be activated to promote situating and/or accumulation of the material to be deposited. Deposition 120 of the material to be deposited can be performed utilizing any suitable technique that provides a desired amount on the surface of the scaffolding block. Deposition can be facilitated by utilizing one or more carriers that aid in the delivery and placement of the material. For example, deposition operations can be facilitated by utilizing a solvent as a carrier for the material to be deposited and applying the mixture onto the surface of the scaffolding material. Other techniques that can be utilized to effect deposition include, but are not limited to solvent-free and/or catalyst processes, dipping, diving, vapor deposition, spraying, plasma, colloidal precipitation, nebulization or ultrasonic, electrochemical deposition out of monomer solution and spinning, such as electro-spinning, techniques. For example, vapor deposition polymerization techniques can be utilized by sublimating a vapor, such as one formed by heating dry, powdered, or liquid starting or precursor materials. Parylene, precursor materials can be referred to as dimers. Deposition can be performed at any suitable temperature and pressure that promotes the deposition process. For example, vapor deposition of the dimer can be performed under a vacuum at room temperature. Commercially available precursors include, for example, those available as DPXC, DPXN, and PARYLENE HT™, each of which is available from Specialty Coating Systems, Indianapolis, Indiana.

The deposited material, or precursor material, can then be treated 130 to change, at least partially, its physical properties so that a permanent, or at least semi-permanent, transformation provides a stable layer of deposited material. Typically, the change of the deposited material affects at least one physical property. For example, the treatment can transform the deposited, precursor material to a solvent resistant material. In some cases, transformation of the precursor material effects a change is the characteristics of the precursor material to a mechanically, chemically, electrically, and/or biologically stable or inert composition. Thus, for example, treating the deposited precursor material can comprise initiating or effecting a chemical reaction that changes the viscosity of the precursor material. In accordance with one or more particular embodiments of the invention, one or more treating techniques can comprise polymerizing or promoting the formation of cross-links in the precursor material. In some cases, however, the deposition can further provide conversion of the precursor material into inert stable compositions. For example, vapor deposition polymerization can effect deposition of dimers and conversion by polymerization to form a shell having at least one layer comprising parylene. Thus, some techniques advantageously provide simplified processes resulting in chemically and/or biologically inert structures.

Any suitable scaffolding material can be utilized to provide a template upon which the structures of the invention can be fabricated. Typically the scaffolding materials are selected relative to the material comprising the shell. In accordance with one or more particular embodiments of the invention, the shell can comprise a porous material such that the scaffolding materials can be changed to a state or form that can transport through the shell. For example, the scaffolding material can comprise a material that can be dissolved in a solvent, preferably a solvent that readily transpires or transports through the shell. In accordance with further embodiments of the invention, the scaffolding material can transpire through the porous shell. For example, the scaffolding can comprise a soluble and/or yaporizable material that can diffuse through the one or more layers comprising the shell of the nanoscale or mesoscale structures. The soluble materials can be soluble in aqueous or hydrocarbon-based media such as, but not limited to water, alcohols, including glycols, as well as oils, ethers, ketones, and other organic solvents. For example, the scaffolding can comprise a carbohydrate such as a sugar that can dissolve and transpire through parylene, while in an aqueous solution. Other techniques directed at removing 140 the scaffolding or otherwise effecting evacuation of the scaffolding material from within the enclosed volume of the shell can be utilized. For example, techniques that promote a phase change, such as liquefying or vaporizing, the scaffolding material can be utilized. Thus, directing energy, such as, but not limited to, light or other electromagnetic radiation, and/or heat, on the scaffolding material can be utilized in the techniques of the invention.

Further and in accordance with one or more embodiments of the invention, the scaffolding material can comprise a material having a solid phase at a first or first set of conditions, such as at conditions conducive to vapor deposition polymerization processes, and a non-solid, vapor or liquid, phase at a second or other set of conditions. Thus, deposition and/or transformation processes can be performed at the first set of conditions on a solid scaffolding material to form a stable shell. Upon completion thereof, the structures can be exposed to a second set of conditions that promote a phase change of the scaffolding material to a state that can transpire through the shell. For example, the scaffolding material can comprise water which can be in a solid state, as ice crystals, at a first set of conditions, and can be a liquid, or vapor, state at a second set of conditions. In the vaporized or liquefied state, the scaffolding material can transpire through the stable shell. Thus, one or more methods or techniques of the invention can further comprise one or more acts pertinent to removing scaffolding materials, such as the spherically-shaped particle, and/or to providing a cavity defined by the porous, monolithic shell by, for example, exposing the structures to conditions that promote removal of the one or more scaffolding materials.

In some cases, the scaffolding or template material comprises a metal, alloys or oxides thereof. For example, the material comprising the scaffolding can be aluminum oxide or silicium.

The structures of the invention can further be responsive to one or more external conditions that can at least partially alter at least one property thereof. For example, one or more layers can exhibit impermeable properties at a first condition and also be selectively permeable at one or more other conditions. Non-limiting examples of such first and/or alternative conditions can include the temperature and/or pH of and/or the presence or absence of one or more species in the environment and/or the presence or absence of a magnetic or electric field. Thus, in accordance with one or more embodiments, the invention provides nanoscaled and mesoscaled structures that can serve as capsule that can trap, and, in some cases selectively release, the one or more species.

Functionalization 150 of the one or more surfaces, or at least portions of the one or more surfaces, can be effected through any technique. Functionalization can comprise one or more acts directed at rendering at least a portion of the surface as non-porous or at least semipermeable. Non-limiting examples of such techniques include, but are not limited to, electrodeposition, chemical and physical vapor phase deposition, copolymerization, plasma grafting, gas phase, and/or liquid phase substitution reactions, or combinations thereof. The optional deposition or application 150 of one or more functional groups can be performed before, during, or after the scaffold material removal.

The structures made according to the present invention can have one or more uses or be utilized in one or more applications. The structures made according to the present invention can impart or alter electrical, chemical, or other physical properties of an assembly. For example, the structures made according to the present invention can facilitate, serve as or be utilized as components of ultracapacitors, active and passive thermal management systems, electromagnetic shielding materials, radiation dosimeters, drug delivery (time release) capsules, catalysts, textiles, including providing lightweight insulative characteristics, membranes, rheological modifiers, purification systems, displays, separation systems, and/or filtration systems directed at gaseous, bacterial, and viral targets. The structures made according to the present invention can also be utilized in ion exchange, dialysis, and desalination operations as well as in sensor technology and electrochemical devices.

Some aspects pertinent to one or more embodiments of the invention can involve nanoscale and/or mesoscale features or asperities rendered on surfaces that can provide surface behavior-modifying characteristics. Surfaces made according to the present invention can have features that alter the contact properties, i.e., the effective wetting angle, of the surface relative to a fluid, e.g., a droplet, thereon. In some cases, such surface features can reduce the effective coefficient of friction of the surface. Some embodiments of the invention can provide a plurality of protrusions that effectively reduces the contact line, the boundary line around a drop where all three phases, solid, liquid, and air, are in contact. For example, surfaces in accordance with some embodiments of the invention can comprise a plurality of pillars or posts, in regular or random separation distances, whereupon a liquid drop can rest upon and which can effectively trap air or gas thus creating a cushion that inhibits or prevents wetting of the underlying surface. The dimensions, i.e., the height, spacing, and/or width of such nanoscale or mesoscale surface features can vary depending on, among other factors, the properties of the liquid and gas environment. For example, a superhydrophobic surfaces, where liquid drops remain at least quasi-spherical because of, among several factors, the physical and chemical nature of the surface, nanoscale or mesoscale features can be utilized to facilitate gas entrapment between the liquid drop and the substrate surface, which, in turn, decreases the associated capillary forces and reduces the adhesion of the drop to the substrate surface. Where water is the liquid, for example, the features can comprise posts spaced about 100 µm apart with a height of about 150 µm and a thickness or diameter of about 50 µm. The reduced adhesion, in turn facilitates drying or at least removal of the liquid from the substrate surface.

In accordance with the invention, nanoscale structures are prepared by utilizing porous substrates and introducing a material into the pores thereof. The porous substrate can serve as a template or fugitive material that can be removed upon partial or completion of deposition by the material to produce the nanoscale structures.

Any suitable substrate can be utilized to serve as a template. The templates have shaped structures, externally or internally within the matrix thereof, which, as noted, can serve as a mold. The selection of the material can depend on several factors including, but not limited to, the stability, e.g., mechanical and/or thermal dimensional stability, during exposure conditions when the deposited or introduced material is disposed into the pores of the porous substrate. For example, introducing the deposited material can involve extended, cyclic or intermittent, exposure of the substrate to elevated temperatures, e.g., greater than about 25° C; the substrate would preferably remain dimensionally stable at such exposure conditions, without a substantial change of pore density or pore size. Further, compatibility with the depositing materials may be considered in selecting the material of composition of the template substrate. Indeed some embodiments of the invention may advantageously utilize a combination of materials that exhibit a particular behavior under a first condition and a different behavior under other conditions. For example, the substrate material may be hydrophobic under a first condition, e.g., at a particular pH, and exhibit hydrophilic tendencies at different conditions. Other controllable characteristics that may be advantageously utilized during preparation procedures include, but are not limited to, applied pressure behavior, magnetic field response, electric field response, and/or electromagnetic behavior at various exposure wavelengths.

The deposition or introduction of the material can be performed in a plurality of steps. Thus, in some embodiments of the invention, a first material can be introduced to fabricate nanoscale structures, as substantially described in Example 7 below, and a second material can be disposed in the hollow nanoscale structures prior to or after removal of the template. The subsequently introduced material can be disposed in the structures of the invention by any suitable technique including, for example, chemical vapor deposition and immersion. Moreover, discussed herein, one or more functional groups may be disposed on a surface or on asperities of the nanoscale structures of the invention.

### EXAMPLES

The function and advantages of these and other embodiments of the invention can be further understood from the examples below, which illustrate the benefits and/or advantages of the one or more systems and techniques of the invention but do not exemplify the full scope of the invention.

### Example 1

This example describes the preparation of mesoscaled structures.

Scaffolding materials were prepared to be rod-shaped by hot-melting sugar (sucrose). The sucrose granules were heated between to a temperature in a range of about 185° to about 220° C until the granules were transformed into a liquid state. The hot-melted sugar was spun at a rate in a range of about 1,000 to about 3,000 rpm to create fine solid fiber structures in a cotton candy machine. The spun solid fiber structures were allowed to cool to about room temperature.

The formed scaffolding materials were then coated by vapor phase deposition utilizing a Model PDS 2010 LABCOTER® 2, available from Specialty Coating Systems, Indianapolis, Indiana, of a parylene precursor, dimer (DPXC) to create a polymeric layer of parylene. Vaporization was performed at a temperature of about 150° C at a pressure of about 1 torr. Pyrolization was performer at a temperature of about 680° C at a pressure of about 0.5 torr. Deposition was performed at a temperature of about 25° C with a chamber vacuum pressure of about 0.1 torr.

Following vapor phase coating, the samples were exposed to hot water at near boiling point, having a temperature in a range of about 80° to about 90° C. The hot water solvent was replaced every about twelve hours. After about four days, the mesoscaled structures were dried under vacuum, of about -25 psi, in an oven at a temperature of about 60° C.

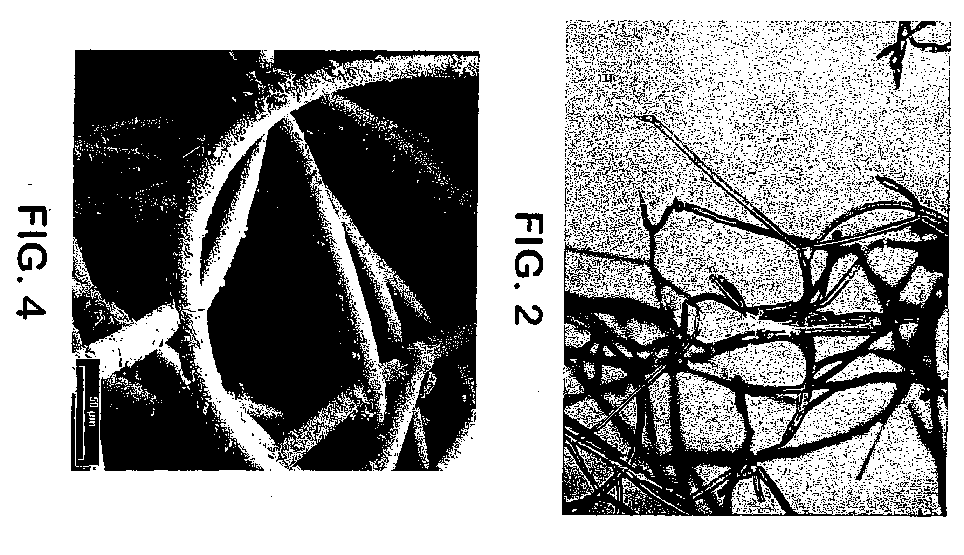

FIG. 2 is a copy of a photomicrograph showing resultant mesoscale tube structures.

### Example 2

This example describes the preparation of nanoscale structures in accordance with one or more embodiments of the invention.

Scaffolding materials were prepared to be substantially spherically-shaped by hot-melting sucrose as substantially described in Example 1. The formed scaffolding materials were then coated by vapor phase deposition of dimer material (DPXC) to create a polymeric layer of parylene also as substantially described in Example 1.

Following coating, the sucrose scaffolding materials were removed from the structures by dissolution as substantially described in Example 1.

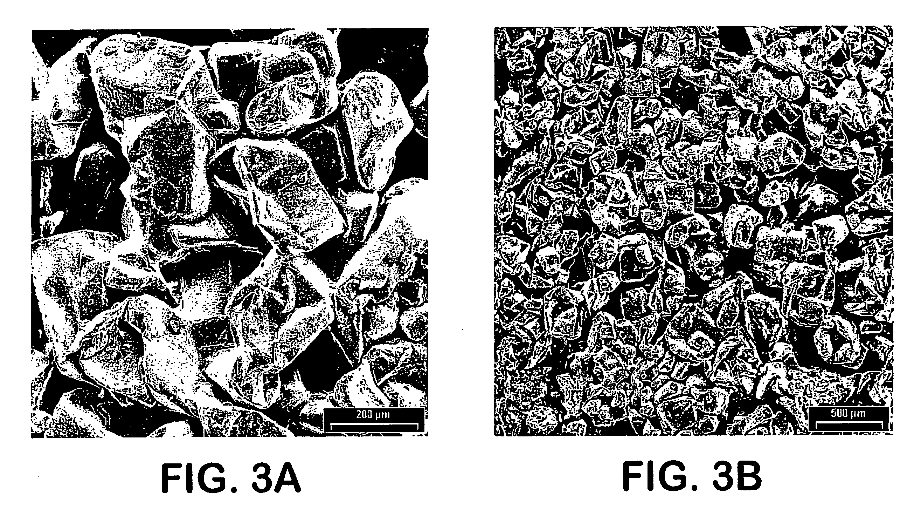

FIGS. 3A and 3B are copies of photomicrographs showing the resultant spherical structures.

### Example 3

This example describes the functionalization of structures in accordance with one or more embodiments of the invention.

Scaffolding materials were prepared by hot-melting sucrose as substantially described in Example 1. The formed scaffolding materials were then coated by vapor phase deposition of dimer material (DPXC) to create a polymeric layer of parylene also as substantially described in Example 1. Following coating, the sucrose scaffolding materials were removed from the nanoscale structures by dissolution as substantially described in Example 1.

Copper was deposited on the outer surface of the structures by utilizing electroless copper coating techniques to produce a copper layer with a thickness of about 0.2 to about 0.3 mm.

FIG. 4 is a copy of a photomicrograph showing the copper-coated structures.

### Example 4

In this example, polymer films were fabricated to form nanoscale fibers.

Porous films (ANODISC® porous aluminum oxide membrane filters available from Whatman PLC, Middlesex, United Kingdom) were utilized as templates. These templates comprised of pores that extended from the exposed surfaces thereof.

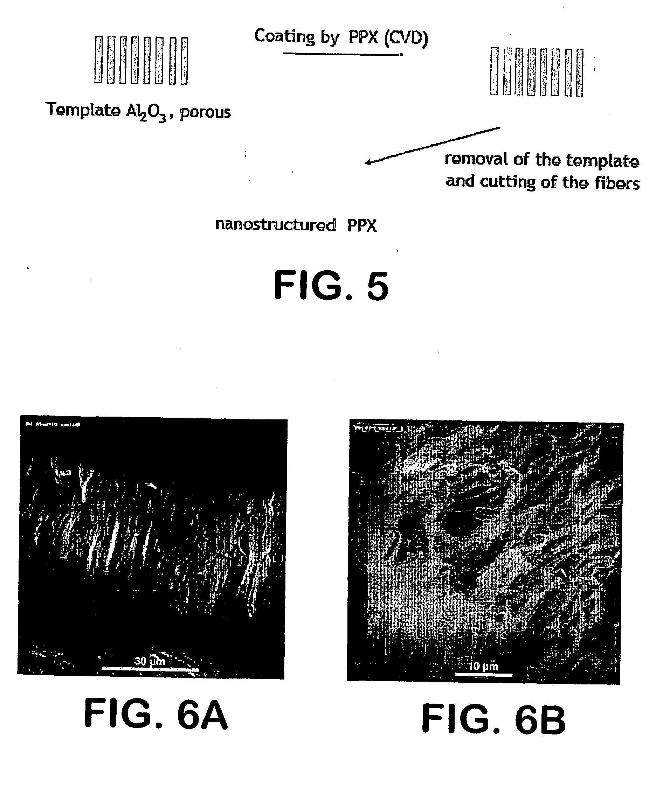

As schematically illustrated in FIG. 5, 2,2 paracyclophane (DIMER N available from Specialty Coating Systems, Indianapolis, Indiana) was used as a precursor material in a LABCOTER® vapor deposition system to deposit and form polymeric parylene (indicated as PPX) nanoscale fibers in the aluminum oxide porous films template.

The precursor material was vaporized at a temperature of about 175° C and pyrolyzed at a temperature of about 650° C under a vacuum pressure of about 5500 Pa (55 mbar) to coat the substrate. Deposition thereof was performed at a temperature of about 25° C.

The aluminum oxide template was removed by dissolving it in an about 48 % aqueous hydrofluoric acid solution. Dissolving in the acid solution was essentially completed in about three days. Any residual hydrofluoric acid was removed from the parylene polymer films by evaporation.

Vapor deposition of parylene utilizing porous membrane produced films with corresponding fiber-shaped structures. The resultant polymeric films were about 1.5 µm thick and the fiber-shaped structures were substantially perpendicular with respect to a plane defined by the polymeric films, corresponding to the surface of the aluminum oxide membrane template as shown in the copy of the photomicrograph in FIG. 6A. The polymeric films were separated from each other to expose the nanoscale fibers formed therebetween. In particular, because the membrane template was comprised of pores that substantially extended across its thickness, deposited parylene structures were correspondingly fabricated as shown in the copies of photomicrographs of FIG. 6B. The PPX nanoscale fibers had a diameter of about 100 nm.

### Example 5

In this example, nanoscale fibers were fabricated in substantially the same manner as described in Example 4 except for the utilization of semi-porous templates. The semi-porous templates were fabricated to have blinded pores, only one surface of the template substrate have pores, by electrochemical anodic oxidation of aluminum metal sheets to form compact and dense, but highly porous surfaces on the anode. The surfaces obtained by anodic oxidation can be detached from the bare metal by using a voltage detachment procedure, without employing chemical etching techniques. The procedure typically produces porous alumina membranes with closed, non-porous outer surfaces. Ordered pore regions at various anode voltages typically produce porous alumina membranes suitable as templates having various pore diameters ranging from about 30 to 70 nm. Such techniques have been disclosed by, for example, Schneider et al., in "Freestanding, Highly Flexible, Large Area, Nanoporous Alumina Membranes with Complete Through-Hole Pore Morphology," European Journal of Inorganic Chemistry, volume 2005, issue 12 , pages 2352-2359.

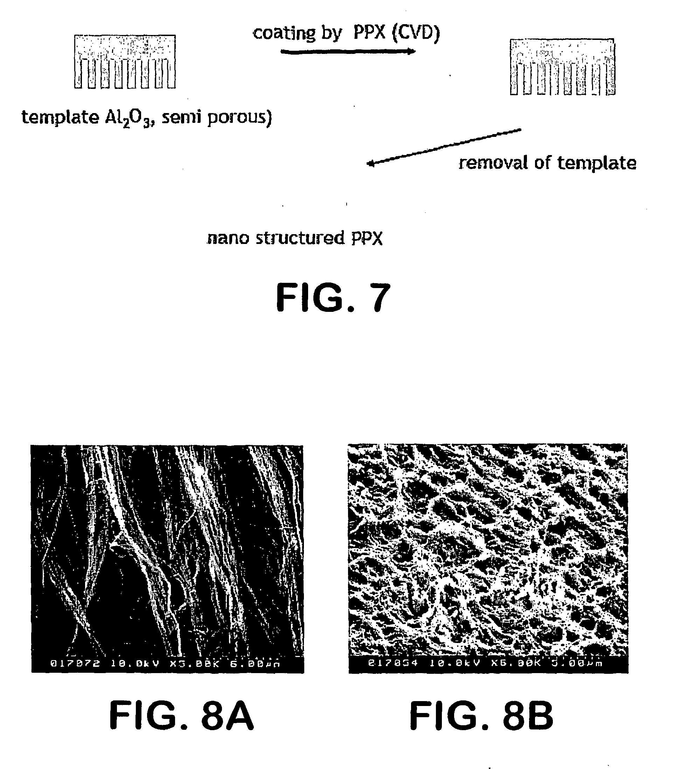

The semi-porous membranes were utilized as templates in substantially similar fashion as described in Example 4. FIG. 7 schematically illustrates the steps utilized to produce nanoscale fiber structures shown in FIG. 8A, which is a reproduction of a TEM image. As depicted in FIG. 7, the semi-porous template, having blinded pores, was coated by vapor deposition with a parylene precursor material which polymerized to form parylene. The parylene substantially filled the pores as well as the open, non-blinded side of the template substrate. The aluminum substrate was then removed by dissolved in a hydrofluoric acid solution leaving nanostructured PPX fibers. The parylene fibers were secured or attached at one end thereof to a parylene layer as shown in FIG. 8B, which is also a reproduction of a TEM image. The nanoscale fibers had a diameter of about 60 nm.

### Example 6

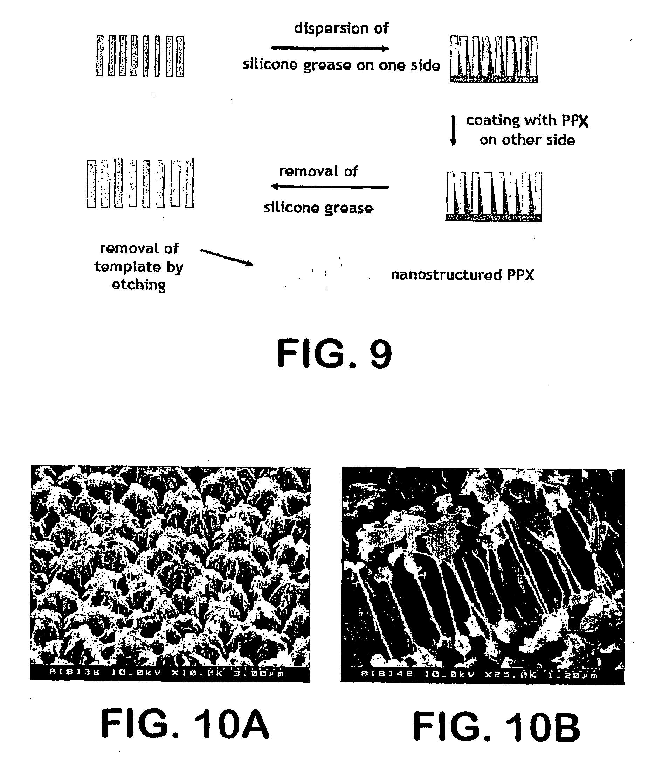

In this example, nanoscale fibers were fabricated in substantially the same manner as described in Example 4 except for the utilization of semi-porous templates. Unlike Example 5, the semi-porous templates were fabricated to have blinded or covered pores by applying a film or coat of an inert material, silicone grease. The semi-porous membranes were then utilized as templates in substantially similar fashion as described in Examples 4 and 5. FIG. 9 schematically illustrates the steps utilized to produce nanoscale fiber structures shown in FIGS. 10A and 10B, which are reproductions of TEM images. In particular, ANODISC® porous aluminum oxide membrane filters with pores extending substantially across the thickness thereof were coated on one surface with an inert material, silicone grease. The substrate, having blinded pores, was then coated with parylene as described above. The blinding coat was then removed by washing with tetrahydrofuran and hexane. The aluminum template was removed by chemical etching in hydrofluoric acid to produce the hedgehog-shaped nanoscale structures, shown in FIG. 10A. FIG. 10B shows a cross-sectional view after breaking the formed parylene film.

### Example 7

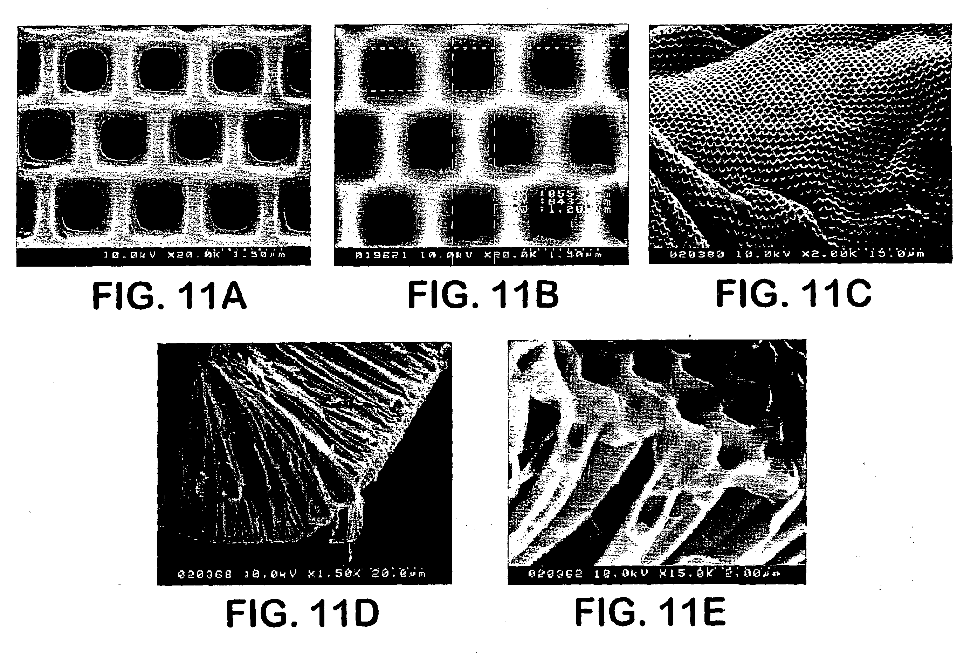

Hollow nanoscale fibers were prepared in this example in substantially similar fashion as described in the examples above. A porous silicon substrate was utilized as a template in parylene vapor deposition operations. The porous silicon substrate, as shown FIG. 11A which is a reproduction of an SEM image, had pores with a nominal diameter of about 1 µm. After vapor deposition with the polymer precursor material, the effective pore diameter was reduced to about 850 nm. FIG. 11B is a copy of an SEM image of the parylene-coated silicon template.

The porous silicon template was dissolved in a potassium hydroxide bath, leaving a flexible porous parylene layer, shown in FIG. 11C which is a reproduction of an SEM image thereof. The polymeric hollow tubular structures are shown in detail in FIGS. 11D and 11E, which are reproductions of SEM images. The hollow tubular parylene structures had a diameter of about 40 µm. The wall thickness of these tubular structures was determined to be about 230 nm.

This example, as well as the previous examples, illustrate that the systems and techniques of the invention can be utilized to produce nanoscale and/or mesoscale structures. In particular, solid and hollow fiber structures can be produced by utilizing a fugitive or removable material as a mold or template upon which one or more precursor materials can be deposited and form the produced nanoscale and/or mesoscale structures.

Having now described some illustrative embodiments of the invention, it should be apparent to those skilled in the art that the foregoing is merely illustrative and not limiting, having been presented by way of example only. Numerous modifications and other embodiments are within the scope of one of ordinary skill in the art and are contemplated as falling within the scope of the invention. In particular, although many of the examples presented herein involve specific combinations of method acts or system elements, it should be understood that those acts and those elements may be combined in other ways to accomplish the same objectives.

Further, acts, elements, and features discussed only in connection with one embodiment are not intended to be excluded from a similar role in other embodiments.

It is to be appreciated that various alterations, modifications, and improvements can readily occur to those skilled in the art and that such alterations, modifications, and improvements are intended to be part of the disclosure and within the scope of the invention, as defined by the appended claims.

Use of ordinal terms such as "first," "second," "third," and the like in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Those skilled in the art should appreciate that the parameters and configurations described herein are exemplary and that actual parameters and/or configurations will depend on the specific application in which the systems and techniques of the invention are used. Those skilled in the art should also recognize or be able to ascertain, using no more than routine experimentation, equivalents to the specific embodiments of the invention. It is therefore to be understood that the embodiments described herein are presented by way of example only and that, within the scope of the appended claims; the invention may be practiced otherwise than as specifically described.

## Claims

1. A method of fabricating nanoscale structures comprising acts of:
providing a porous substrate having pores of less than about 1 µm;
depositing parylene precursor material into the pores; and
removing the substrate to produce the nanoscale structures.

2. A method of claim 1, wherein porous substrate comprises pores that substantially traverse the thickness thereof, optionally wherein the porous substrate comprises pores that are not interconnected.

3. A method of claim 1, wherein the pores form an interconnected network.

4. A method of claim 1, wherein depositing the parylene precursor material coats the wall of the pores, optionally wherein the parylene precursor material is deposited to fill the pores.

5. A method of claim 1, wherein the porous substrate comprises aluminum or silicium.

6. A method of claim 1, wherein the act of removing the substrate comprises dissolving the substrate in an acid solution.

7. A method of claim 1, wherein the act of providing the porous substrate comprises anodizing the substrate.

8. A method of claim 1, further comprising applying an inert coat on a surface of the substrate.

9. A method of claim 1, further comprising cutting the nanoscale structures.

10. A method of claim 1, wherein the nanoscale structure comprises a plurality of hollow fibers, optionally wherein the hollow fiber has an outer diameter of less than or equal to about 100 nm.

## Patentansprüche

1. Verfahren zur Herstellung von nanoskaligen Strukturen, das die Vorgänge von Folgenden umfasst:
Bereitstellen eines porösen Substrats, das Poren von kleiner als etwa 1 µm aufweist;
Einlagern von Parylenvorläufermaterial in die Poren; und
Entfernen des Substrats, um die nanoskaligen Strukturen zu erzeugen.

2. Verfahren nach Anspruch 1, worin poröses Substrat Poren umfasst, die im Wesentlichen die Dicke davon durchziehen, worin optional das poröse Substrat Poren umfasst, die nicht miteinander verbunden sind.

3. Verfahren nach Anspruch 1, worin die Poren ein verbundenes Netzwerk bilden.

4. Verfahren nach Anspruch 1, worin das Einlagern des Parylenvorläufermaterials die Wand der Poren beschichtet, worin optional das Parylenvorläufermaterial eingelagert wird, um die Poren zu füllen.

5. Verfahren nach Anspruch 1, worin das poröse Substrat Aluminium oder Silicium umfasst.

6. Verfahren nach Anspruch 1, worin der Vorgang des Entfernens des Substrats das Auflösen des Substrats in einer Säurelösung umfasst.

7. Verfahren nach Anspruch 1, worin der Vorgang des Bereitstellens des porösen Substrats das Eloxieren des Substrats umfasst.

8. Verfahren nach Anspruch 1, das weiter das Auftragen einer inerten Beschichtung auf eine Oberfläche des Substrats umfasst.

9. Verfahren nach Anspruch 1, das weiter das Schneiden der nanoskaligen Strukturen umfasst.

10. Verfahren nach Anspruch 1, worin die nanoskalige Struktur eine Vielzahl an Hohlfasern umfasst, worin optional die Hohlfaser einen Außendurchmesser von kleiner als oder gleich etwa 100 nm aufweist.

## Revendications

1. Procédé de fabrication de structures nanométriques comprenant les actions consistant à :
fournir un substrat poreux étant doté de pores inférieurs à environ 1 µm ;
déposer un matériau précurseur du parylène dans les pores ; et
éliminer le substrat pour produire les structures nanométriques.

2. Procédé selon la revendication 1, dans lequel le substrat poreux comprend des pores qui traversent de façon substantielle son épaisseur, éventuellement dans lequel le substrat poreux comprend des pores qui ne sont pas interconnectés.

3. Procédé selon la revendication 1, dans lequel les pores forment un réseau interconnecté.

4. Procédé selon la revendication 1, dans lequel l'action consistant à déposer le matériau précurseur du parylène enrobe la paroi des pores, éventuellement dans lequel le matériau précurseur du parylène est déposé pour remplir les pores.

5. Procédé selon la revendication 1, dans lequel le substrat poreux comprend de l'aluminium ou du silicium.

6. Procédé selon la revendication 1, dans lequel l'action consistant à éliminer le substrat comprend de dissoudre le substrat dans une solution d'acide.

7. Procédé selon la revendication 1, dans lequel l'action consistant à fournir le substrat poreux comprend d'anodiser le substrat.

8. Procédé selon la revendication 1, comprenant en outre d'appliquer un enrobé inerte sur une surface du substrat.

9. Procédé selon la revendication 1, comprenant en outre de découper les structures nanométriques.

10. Procédé selon la revendication 1, dans lequel la structure nanométrique comprend une pluralité de fibres creuses, éventuellement dans lequel la fibre creuse est dotée d'un diamètre externe inférieur ou égal à environ 100 nm.
